**Europäisches Patentamt**

(19) **European Patent Office**

**Office européen des brevets**

(11) Veröffentlichungsnummer: **0 242 735**
**B1**

(12) # EUROPÄISCHE PATENTSCHRIFT

(45) Veröffentlichungstag der Patentschrift:
04.01.89

(51) Int. Cl.⁴: **B 60 T 17/00**, B 60 T 8/22

(21) Anmeldenummer: **87105312.0**

(22) Anmeldetag: **10.04.87**

(54) **Ventileinrichtung mit einer Entlüftung für Druckluftbremsen von Fahrzeugen.**

(30) Priorität: **17.04.86 DE 3612993**
**02.05.86 DE 3614845**

(43) Veröffentlichungstag der Anmeldung:
**28.10.87 Patentblatt 87/44**

(45) Bekanntmachung des Hinweises auf die Patenterteilung:
**04.01.89 Patentblatt 89/1**

(84) Benannte Vertragsstaaten:
**AT CH DE FR GB IT LI**

(56) Entgegenhaltungen:
**DE-B-1 605 275**
**DE-B-2 058 653**
**DE-C-1 605 254**

(73) Patentinhaber: **KNORR- BREMSE AG, Moosacher Strasse 80 Postfach 401060, D-8000 München 40 (DE)**

(72) Erfinder: **Skach, Kuno, Koschatgasse 34, A-1190 Wien (AT)**

EP 0 242 735 B1

## Beschreibung

Die Erfindung betrifft eine Ventileinrichtung für Druckluftbremsen von Fahrzeugen, mit einem Gehäuse, in dessen Innenraum sich korrosionsgefährdete Bauteile befinden, und mit einem Entlüftungsventilteil zum Ablassen komprimierter Luft unter Umgehen des Innenraumes zur Atmosphäre, insbesondere Druckübersetzer für Druckluftbremsen von Schienenfahrzeuge, dessen Übersetzungsverhältnis durch einen in seinem Hebelverhältnis veränderlichen Waagebalken einstellbar ist.

Eine derartige Ventileinrichtung ist beispielsweise aus der DE-B-2 058 653 bekannt. Diese Ventileinrichtung umfaßt sowohl einen Waagebalken wie auch einen waagebalkenlosen Druckübersetzer, beide Druckübersetzer weisen je ein Entlüftungsventilteil auf, welches von einem als Kolbenstange ausgebildeten Stößel betätigbar ist. Der Stößel endet jeweils stirnseitig mit einem Ventilsitz, welchem eine innerhalb des vom Ventilsitz umschließbaren Flächenabschnittes durchbrochene, im Ventilgehäuse abgedichtet beweglich geführte Ventildichtung gegenübersteht. Die Durchbrechung der Ventildichtung steht großquerschnittig mit der Atmosphäre in Verbindung. Die aus der Bremsanlage abzulassende, komprimierte Luft strömt bei dieser bekannten Ventileinrichtung beim Abheben des Ventilsitzes von der Ventildichtung jeweils nur durch die Durchbrechung unmittelbar zur Atmosphäre ab, wodurch eine rasche und weitgehend ungedrosselte Entlüftung möglich ist.

Der eine Druckübersetzer der bekannten Ventileinrichtung weist einen Innenraum auf, in welchem sich ein verschieblicher Waagebalken sowie eine eine Kolbenstangenführung umfassende Kolbeneinrichtung befindet. Dieser Innenraum muß drucklos sein und ist daher beispielsweise über eine undichte Einstellverschraubung ständig mit der Atmosphäre verbunden. Druckänderungen und Kolbenbewegungen bewirken, daß ein gewisser Luftaustausch zwischen dem Innenraum und der Atmosphäre erfolgt. Bei diesem Luftaustausch kann feuchte Luft in den Innenraum gelangen und die in diesem befindlichen Bauelemente, insbesondere bewegliche Führungen, aber auch Gehäuse- oder sonstigeWandungen korrodieren. Diese Korrosionen vermindern die störungsfreie Betriebszeit und die Lebensdauer der Ventileinrichtung, sie können zum plötzlichen Ausfall der Ventileinrichtung führen.

Auch bei andersartigen Ventileinrichtungen können derartige Verhältnisse vorliegen.

Bei anderen Ventileinrichtungen, beispielsweise dem aus der DE-C-1 605 254 bekannten, ebenfalls in seinem Innenraum einen Waagebalken beinhaltenden Druckübersetzer weist der Stößel des Entlüftungsventilteiles eine von der abzulassenden Luft zu durchströmende Bohrung auf, welche in einen vom Innenraum getrennten Raum einmündet, der seinerseits über eine Entlüftung mit der Atmosphäre in Verbindung steht. Auch bei diesem bekannten Druckübersetzer gelangt die abzulassende Luft nicht in den eine gesonderte Entlüftung aufweisenden Innenraum, auch hier können im Innenraum Korrosionen auftreten.

Aus der DE-B-1 605 275 ist es schließlich für einen Waagebalken-Druckübersetzer bekannt, eine geschlossene Ventildichtung zu verwenden und den vom Waagebalken bewegbaren, abgedichtet im Gehäuse verschieblich gelagerten Stößel mit einem Luftführungskanal zu versehen, der einerseits innerhalb des vom Ventilsitz umschlossenen Stirnflächenschnittes und andererseits in den Innenraum des Druckübersetzers mündet. Der Innenraum steht seinerseits über eine ein Luftfilter aufweisende Entlüftung mit der Atmosphäre in Verbindung. Durch diese Ausbildung wird erreicht, daß die abzulassende, komprimierte Luft durch den Luftführungskanal des Stößels in den Innenraum strömt, wobei sie sich entspannt und demgemäß trocken wird; diese entspannte, trockene Luft durchströmt den Innenraum und gelangt sodann durch die Entlüftung zur Atmosphäre. Durch die Durchströmung des Innenraumes mit trockener Luft wird die Korrosionsgefährdung in diesem Innenraum beseitigt, es ist keine vorzeitige Störung der Funktion bzw. vorzeitiger Ausfall der bekannten Ventileinrichtung durch Korrosion zu befürchten. Die Anordnung weist allerdings die mitunter störende Eigenheit auf, daß die ganze, abzulassende Luftmenge den Innenraum durchströmen muß, wodurch ein den Entlüftungsvorgang verzögender Luftstau möglich ist und bei Verwendung minderwertiger Schmierfette an im Innenraum befindlichen Teilen diese Schmierfette vorzeitig eintrocknen können.

Es ist Aufgabe der Erfindung, eine Ventileinrichtung der eingangs genannten Art zu schaffen, welche in einfacher und billiger Weise die vorstehend angeführten Mängel vermeidet, also einerseits den Innenraum und die in diesem befindlichen Ventilelemente vor Korrosion schützt, andererseits aber keinen Luftstau und damit keine Entlüftungsverzögerung sowie auch keine sonstigen Schäden im Innenraum bewirken kann.

Diese Aufgabe wird bei einer Ventileinrichtung der eingangs angebenen Art nach der Erfindung dadurch gelöst, daß von einem ständig mit der Atmosphäre in Verbindung stehenden, von der abzulassenden Luft beaufschlagbaren Raum des Entlüftungsventilteiles eine gedrosselte Verbindung zum Innenraum besteht. Hierdurch wird erreicht, daß während Ablaßvorgängen für die komprimierte Luft diese einerseits rasch und ungedrosselt zur Atmosphäre gelangen kann, während andererseits ein geringer Anteil dieser abzulassenden Luftmenge durch die Verbindung zum Innenraum gelangt, wobei sie durch Entspannen getrocknet wird, in den Innenraum einströmt, diesen gegebenenfalls durchströmt und durch dessen Entlüftung oder auch nachfolgend durch den Raum des Entlüftungsventilteils in die Atmosphäre entweicht. Der Innenraum wird also von einer nur geringen Menge trockener Luft durchströmt bzw. beaufschlagt, wodurch er einerseits zum Ausschließen von Korrosionen zwar trocken gehalten wird, andererseits aber keine unerwünschte Austrocknungsvorgänge erfolgen.

Die Unteransprüche zeigen nach der weiteren Erfindung mögliche, vorteilhafte Ausbildungsmöglichkeiten für eine derartige Ventileinrichtung auf.

In der Zeichnung ist ein Ausführungsbeispiel für eine nach der Erfindung ausgebildete Ventileinrichtung dargestellt und zwar zeigt

Fig. 1 schematisch eine derartige Ventileinrichtung und

Fig. 2 eine Ausführungsform einer Einzelheit der Ventileinrichtung in vergrößertem Maßstab.

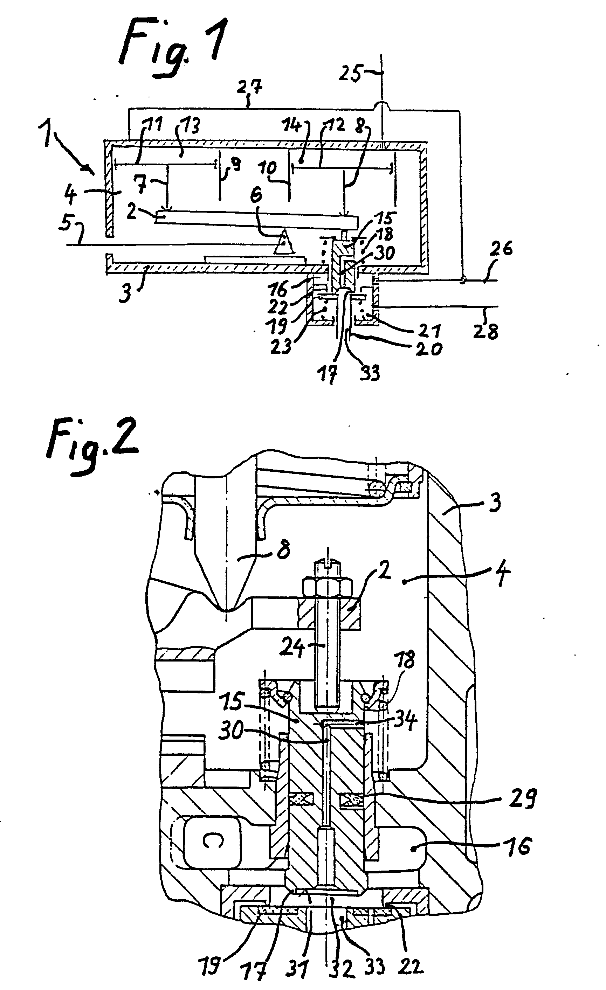

Die Fig. 1 zeigt einen Druckübersetzer 1 mit Waagebalken 2, wie er in seinem Grundkonzept für Druckluftbremsen von Schienenfahrzeugen üblich ist. Der Waagebalken 2 des Druckübersetzers 1 ist in einem von einem Gehäuse 3 umschlossenen Innenraum 4 angeordnet, er ruht in seinen mittleren Abschnitt auf einem durch eine Stange 5 verschieblichen Widerlager 6, das sich andererseits gegen das Gehäuse 3 abstützt. Die Stange 5 ist nach einer ersten Ausführungsform mit Spiel und somit undicht verschieblich in einer Durchbrechung des Gehäuses 3 geführt; stattdessen kann das Gehäuse 3 auch eine nicht dargestellte, gegebenenfalls mit einem Filter und/oder einem Rückschlagventil versehene, gesonderte Entlüftungsöffnung für den Innenraum 4 aufweisen. An beiden Enden des Waagebalkens 2 greifen zur einen Seite Kolbenstangen 7 bzw. 8 an, welche mit den in Zylinderkörpern 9 bzw. 10 geführten Kolben 11 bzw. 12 verbunden sind. Auf der dem Innenraum 4 abgewandten Seite sind die Kolben 11 und 12 von Zylinderräumen 13 bzw. 14 beaufschlagbar. Andererseits der Kolbenstange 8 greift am Waagebalken 2 ein Stößel 15 an, der abgedichtet verschieblich im Gehäuse 3 gelagert ist und in einem Ventilraum 16 mit einem Ventilsitz 17 endet. Zwischen das Gehäuse 3 und den Stößel 15 ist eine Feder 18 eingespannt, welche den Stößel 15 gegen den Waagebalken 2 drückt. Dem Ventilsitz 17 steht eine Ventildichtung 19 gegenüber, welche mit diesem ein Ventil 17, 19 bildet und welche in ihrem vom Ventilsitz 17 umschließbaren Flächenbereich durchbrochen ist und auf ihrer stößelabgewandten Seite ein Entlüftungsrohr 20 trägt, das von der Durchbrechung zur Atmosphäre führt. Es wird somit ein Entlüftungsventilteil 15, 17, 19, 20 gebildet. Das Entlüftungsrohr 20 durchbricht seinerseits abgedichtet verschieblich das Gehäuse 3. Die Ventildichtung 19 befindet sich in einem Raum 21, der durch eine einen Ventilsitz 22 aufweisende Wandung des Gehäuses 3 vom Ventilraum 16 abgetrennt ist und welcher vom Entlüftungsrohr 20 durchsetzt wird. Im Raum 21 befindet sich eine die Ventildichtung 19 in Richtung zu den Ventilsitzen 17 und 22 belastende Feder 23.

Der Aufbau des Druckübersetzers 1 im Bereich des Stößels 15 ist aus Fig. 2 deutlicher ersichtlich; die eingetragenen, zu Fig. 1 übereinstimmenden Bezugszahlen verdeutlichen den Grundaufbau, so daß sich weitere Erläuterungen hierzu erübrigen. Es ist erkennbar, daß der Waagebalken 2 über eine justierbare Stellschraube 24 mit dem Stößel 15 gekoppelt ist.

Gemäß Fig. 1 mündet in den Zylinderraum 14 eine Rohrleitung 25 ein, durch welche dem Druckübersetzer 1 der zu übersetzende Eingangsdruck zugeführt wird. Der vom Druckübersetzer 1 übersetzte Ausgangsdruck wird vom Ventilraum 16 durch eine Rohrleitung 26 dem Druckluftverbraucher, im allgemeinen einen Bremszylinder, zugeführt. Der Zylinderraum 13 ist über einen Zweigkanal 27 mit dem Ventilraum 16 verbunden. In den Raum 21 mündet eine Druckluftversorgungsleitung 28 ein.

Wird dem Druckübersetzer 1 durch die Rohrleitung 25 ein zu übersetzender Eingangsdruck zugeführt, so drückt der Kolben 12 das rechte Ende des sich um das Widerlager 6 drehenden Waagebalkens 2 nach unten, wobei der Stößel 15 mitgenommen wird, mit seinem Ventilsitz 17 die Durchbrechung der Ventildichtung 19 absperrt und die Ventildichtung 19 unter Abhebung vom Ventilsitz 22 mitnimmt. Nunmehr strömt Druckluft aus dem Raum 21 durch den Ventilraum 16 als Übersetzter Ausgangsdruck durch die Rohrleitung 26 zum Druckluftverbraucher, zugleich gelangt dieser Ausgangsdruck durch den Kanal 27 in den Zylinderraum 13, wodurch durch Beaufschlagen des Kolbens 11 der Waagebalken 2 bis zum Wiederaufsetzen der Ventildichtung 19 auf den Ventilsitz 22 und damit Absperren der Druckluftzufuhr zum Ventilraum 16 zurückgedreht wird. Beim Druckabbau in der Rohrleitung 25 spielen sich entsprechend umgekehrt verlaufende Vorgänge ab, wobei die Feder 18 durch Anheben des Stößels 15 den Ventilsitz 17 von der Ventildichtung 19 abhebt. Nunmehr kann Druckluft vom Verbraucher durch den Ventilraum 16, die Durchbrechung der Ventildichtung 19 und das Entlüftungsrohr 20 rasch zur Atmosphäre abströmen.

Insoweit entspricht der Aufbau und die Funktionsweise des Druckübersetzers 1 den bekannten Waagebalken-Druckübersetzer.

Wie insbesondere aus Fig. 2 deutlich zu ersehen, weist der zu seiner abgedichtet verschieblichen Führung mit einem Dichtring 29 versehene Stößel 15 einen Drosselkanal 30 auf, der ihn auf nahezu in seiner ganzen Länge durchsetzt und einerseits innerhalb des vom Ventilsitz 17 umschlossenen Stirnflächenabschnittes 31 mündet; er steht also ständig mit einem Raum 32 innerhalb des Entlüftungsventilteiles 15, 17, 19, 20 in Verbindung, der durch den Innenraum 33 des Entlüftungsrohres 20 ständig mit der Atmosphäre in Verbindung steht und durch das Ventil 17, 19 an den Innenraum 4 anschließbar ist. Andererseits mündet in den Drosselkanal 30 eine Querbohrung 34 ein, welche nahe des dem Ventilsitz 17 abgewandten Endes im Stößel 15 angeordnet ist und welche in den Innenraum 4 mündet. Der Drosselkanal 30 stellt somit zusammen mit der Querbohrung 34 einen Luftführungskanal 30, 34 dar, der den Raum 32 mit dem Innenraum 34 verbindet und der einen wesentlich kleineren Durchströmungsquerschnitt als der Innenraum 33 des Entlüftungsrohres 20 aufweist.

Durch den Luftführungskanal 30, 34 wird bewirkt, daß beim Öffnen des Ventils 17, 19 zum Ablassen von Druckluft aus dem Ventilraum 16 zur Atmosphäre ein Teil der den Raum 32 durchströmenden Luft nicht durch den Innenraum 33 zur Atmosphäre, sondern durch den Luftführungskanal 30, 34 unter Entspannung und damit Trocknung zum Innenraum 4 gelangt. Dieser Luftanteil durchströmt den Innenraum 4, wobei er durch seine Trockenheit eventuelle Feuchtigkeit aufnimmt, ohne infolge seiner geringen Menge jedoch unerwünschte Austrocknungsvorgänge beispielsweise an Schmiermitteln bewirken zu können, und strömt sodann aus dem Innenraum 4 durch die spielbehaftete Führungsstelle der Stange 5 am Gehäuse 3 bzw. die erwähnte, gesonderte Entlüftungsöffnung zur Atmosphäre ab.

Es ergibt sich somit, daß während Entlüftungsvorgängen durch den Druckübersetzer 1 die abzulassende Luft rasch und ungehindert zum größten Teil durch den Raum 32 und den Innenraum 33 des Entlüftungsrohres 20 zur Atmosphäre abströmen kann, während ein geringer Teil dieser Luft den Innenraum 4 zu dessen Trocken- und Sauberhaltung durchströmt. Im Innenraum 4 besteht daher keinerlei Korrosionsgefahr für irgendwelche Teile, auch eindringende Verschmutzung wird alsbald immer wieder ausgeblasen, so daß der Innenraum 4 verschmutzungsfrei gehalten wird.

Nach einer zweiten Ausführungsform ist der Innenraum 4 ohne eigene Außenluftverbindung ausgebildet, hierbei ist also die Stange 5 dicht durch die Wandung des Gehäuses 3 geführt und der Innenraum 4 steht auch über keine sonstige, eigene Entlüftung mit der Atmosphäre in Verbindung, es mündet vielmehr lediglich der Luftführungskanal 30, 34 in ihn ein. Bei dieser Ausführung strömt während Entlüftungsvorgängen durch Öffnen des Ventils 17, 19 ein geringer Teil der auszulassenden Luft in den Innenraum 4 ein, wobei im Innenraum 4 eine geringe Drucksteigerung um beispielsweise 0,3 bar auftritt; beim Ausklingen des Entlüftungsvorganges, nachdem also zumindest nahezu alle auszulassende Luft zur Atmosphäre abgeströmt ist, strömt auch aus dem Innenraum 4 Luft durch den Luftführungskanal 30, 34 zum Raum 32 und aus diesem durch den Innenraum 33 zur Atmosphäre ab, wobei sich im Innenraum 4 wieder Atmosphärendruck einstellt. Es erfolgt also ein "Atmungsvorgang" für den Innenraum 4 mit durch Entspannen getrockneter, sauberer Luft, wodurch der Innenraum korrosionsfrei und sauber gehalten wird.

Es ist selbstverständlich, daß sich das Funktionsprinzip auch bei andersartigen Ventileinrichtungen als dem beschriebenen Druckübersetzer 1 anwenden läßt; es ist lediglich wesentlich, daß die Ventileinrichtung ein Entlüftungsventilteil aufweist, durch welches ein Großteil der abzulassenden Luft ungehindert und zumindest nahezu unmittelbar zur Atmosphäre gelangen kann, während ein geringer Teil dieser abzulassenden Luft abgezweigt und durch bzw. in den vor Korrosion und Verschmutzung zu schützenden Innenraum der Ventileinrichtung geführt und erst dann zur Atmosphäre ausgelassen wird.

**Kurzfassung**

Die Ventileinrichtung für Druckluftbremsen von Fahrzeugen weist ein Entlüftungsventilteil 15, 17, 19, 20 auf, durch welches auszulassende Luft über einen großen Durchströmungsquerschnitt rasch zur Atmosphäre abströmen kann. Ein kleiner Teil dieser abzulassenden Luft wird durch einen Drosselkanal 30 entspannt und damit getrocknet durch einen Innenraum 4 der Ventileinrichtung geführt und von dort zur Atmosphäre ausgelassen; diese Luft schützt die im Innenraum 4 angeordneten Bauteile vor Korrosion, sie hält den Innenraum 4 trocken und sauber.

**Bezugszeichenliste**

| 1 | Druckübersetzer |
|---|---|
| 2 | Waagebalken |
| 3 | Gehäuse |
| 4 | Innenraum |
| 5 | Stange |
| 6 | Widerlager |
| 7 | Kolbenstange |
| 8 | Kolbenstange |
| 9 | Zylinderkörper |
| 10 | Zylinderkörper |
| 11 | Kolben |
| 12 | Kolben |
| 13 | Zylinderraum |
| 14 | Zylinderraum |
| 15 | Stößel |
| 16 | Ventilraum |
| 17 | Ventilsitz |
| 18 | Feder |

| 19 | Ventildichtung |
| 17,19 | Ventil |
| 20 | Entlüftungsrohr |
| 15,17, 19,20 | Entlüftungsventilteil |
| 21 | Raum |
| 22 | Ventilsitz |
| 23 | Feder |
| 24 | Stellschraube |
| 25 | Rohrleitung |
| 26 | Rohrleitung |
| 27 | Zweigkanal |
| 28 | Druckluftversorgungsleitung |
| 29 | Dichtring |
| 30 | Drosselkanal |
| 31 | Stirnflächenabschnitt |
| 32 | Raum |
| 33 | Innenraum |
| 34 | Querbohrung |
| 30,34 | Luftführungskanal |

**Patentansprüche**

1. Ventileinrichtung für Druckluftbremsen von Fahrzeugen, mit einem Gehäuse (3), in dessen Innenraum (4) sich korrosionsgefährdete Bauteile befinden, und mit einem Entlüftungsventilteil (15, 17, 19, 20) zum Ablassen komprimierter Luft unter Umgehen des Innenraumes (4) zur Atmosphäre, insbesondere Druckübersetzer (1) für Druckluftbremsen von Schienenfahrzeugen, dessen Übersetzungsverhältnis durch einen in seinem Hebelverhältnis veränderlichen Waagebalken (2) einstellbar ist, dadurch gekennzeichnet, daß von einem ständig mit der Atmosphäre in Verbindung stehenden, von der abzulassenden Luft beaufschlagbaren Raum (32) des Entlüftungsventilteils (15, 17, 19, 20) eine gedrosselte-Verbindung (30, 34) zum Innenraum (4) besteht.

2. Ventileinrichtung nach Anspruch 1, wobei das Entlüftungsventilteil (15, 17, 19, 20) einen vom Innenraum (4) abgedichtet beweglich in einen ständig von der abzulassenden Luft beaufschlagten Ventilraum (16) führenden Stößel (15) aufweist, der im Ventilraum (16) stirnseitig mit einem Ventilsitz (17) endet, dem eine Ventildichtung (19) gegenübersteht, die innerhalb ihres vom Ventilsitz (17) umschließbaren Flächenabschnittes von einer zur Atmosphäre führenden Durchbrechung (33) durchbrochen ist, dadurch gekennzeichnet, daß der Stößel (15) einen Luftführungskanal (30, 34) beinhaltet, der einen kleineren Durchströmungsquerschnitt als die Durchbrechung (33) aufweist und der einerseits innerhalb des vom Ventilsitz (17) umschlossenen Stirnflächenabschnittes (31) und andererseits in den Innenraum (4) mündet.

3. Ventileinrichtung nach Anspruch 2, dadurch gekennzeichnet, daß der Luftführungskanal (30, 34) als den Stößel (15) von Seiten des Ventilsitzes (17) aus auf nahezu seiner ganzen Länge durchsetzende, zentrische Drosselbohrung (30) ausgebildet ist, in welche eine nahe des dem Ventilsitz (17) abgewandten Endes des Stößels (15) angeordnete Querbohrung (34) einmündet.

4. Ventileinrichtung nach Anspruch 1, 2 oder 3, dadurch gekennzeichnet, daß der Innenraum (4) keine eigene Entlüftung aufweist und somit ausschließlich durch die Verbindung (30, 34) und den Raum (32) des Entlüftungsventils mit der Atmosphäre in Verbindung steht.

5. Ventileinrichtung nach Anspruch 1, 2 oder 3, gekennzeichnet durch die Kombination mit dem an sich bekannten Merkmal, daß der Innenraum (4) mit einer eigenen, gegebenenfalls gefilterten Entlüftung versehen ist.

**Claims**

1. Valve arrangement for compressed air brakes or vehicles containing a housing (3), the internal chamber (4) of which comprises parts which are exposed to corrosion and an exhaust valve portion (15, 17, 19, 20) to discharge compressed air to atmosphere, while bypassing the internal chamber (4), in particular pressure transformers (1) for compressed air brakes for rail vehicles, the transmission ratio of which is adjustable through a balancing beam (2) with a variable lever ratio in which a throttled channel (30, 34) exists between the chamber (32) of the vent portion (15, 17, 19, 20) which permanently communicates with the atmosphere and to which the air to be discharged can be admitted and the internal chamber (4).

2. Valve arrangement according to Claim 1, in which the vent valve portion (15, 17, 19, 20) is provided with a tappet (15) that moves air-tight between the internal chamber (4) and the valve chamber (16) which is permanently pressurized by the air to be discharged and the front face of which ends in a valve seat (17), which is located opposite to a valve gasket (19) which is interrupted inside its surface section that can be encompassed by the valve seat (17) by a port (33) leading to the atmosphere, wherein the tappet (15) comprises an air duct (30, 34) which has a smaller flow passage than port (33) and which on one hand discharges to the front face section (31) encompassed by the valve seat (17) and on the other hand into the internal chamber (4).

3. Valve arrangement according to Claim 2, wherein the air duct (30, 34) is designed as a centric throttled bore (30) crossing the tappet nearly over its whole length starting from the valve seat (17) end into which a transverse bore (34) discharges which is located near the end of tappet (15) opposite to valve seat (17).

4. Valve arrangement according to Claim 1, 2 or 3, wherein the internal chamber (4) is not provided with its own vent and thus exclusively communicates with the atmosphere through channel (30, 34) and chamber (32) of the exhaust valve.

5. Valve arrangement according to Claim 1, 2 or 3, which is characterized by the combination with the generally known feature that the internal chamber (4) is provided with an own possibly filtered vent.

## Revendications

1. Dispositif de valve pour des freins à air comprimé pour des véhicules, avec un carter (3) dans la chambre intérieure (4) duquel se trouvent des éléments constitutifs exposés au danger de corrosion, et avec un élément de valve de désaération (15, 17, 19, 20) pour évacuer dans l'atmosphère de l'air comprimé en contournant ladite chambre intérieure (4), en particulier amplificateur de pression (1) pour des freins à air comprimé de véhicules sur rails dont le rapport de multiplication est réglable par un fléau (2) à rapport de bras de leviers modifiable, caractérisé par le fait qu'il est prévu entre une chambre (32) de l'élément de valve de désaération (15, 17, 19, 20), qui est en liaison permanente avec l'atmosphère et qui est susceptible d'être chargée par de l'air à évacuer, et la chambre intérieure (4), une liaison étranglée.

2. Dispositif de valve selon la revendication 1, dans lequel l'élément de valve de désaération (15, 17, 19, 20) comporte un poussoir (15) mobile avec étanchéité par rapport à la chambre intérieure et menant dans une chambre de soupape (16) chargée en permanence par l'air à évacuer, ledit poussoir se terminant dans la chambre de soupape (16), du côté frontal, par un siège de soupape (17) en face duquel se trouve un moyen d'étanchéité (19) qui est percé, à l'intérieur de sa section de surface susceptible d'être entourée par le siège de soupape, d'une ouverture (33) menant à l'atmosphère, caractérisé par le fait que le poussoir (15) comporte un canal de guidage de l'air (30, 34) ayant une section transversale de passage qui est plus faible que l'ouverture (33), et qui débouche d'une part à l'intérieur de la section de surface frontale (31) entourée par le siège de soupape et d'autre part dans la chambre intérieure (4).

3. Dispositif de valve selon la revendication 2, caractérisé par le fait que le canal de guidage de l'air (30, 34) est réalisé sous la forme d'un perçage d'étranglement centré (30) qui traverse le poussoir (15) à partir du siège de soupape (17), et pratiquement sur toute sa longueur, et dans lequel perçage débouche un perçage transversal (34) agencé près de l'extrémité du poussoir (15), qui est éloignée du siège de soupape.

4. Dispositif de valve selon la revendication 1, 2 ou 3, caractérisé par le fait que la chambre intérieure (4) ne comporte pas elle-même une mise à l'atmosphère, étant ainsi exclusivement en liaison avec l'atmosphère par la liaison (30, 34) et la chambre (30) de la soupape de désaération.

5. Dispositif de valve selon la revendication 1, 2 ou 3, caractérisé par la combinaison avec la caractéristique en soi connue, que la chambre intérieure (4) est pourvue d'une désaération qui lui est propre et qui est éventuellement de nature filtrante.

*Fig. 1*

*Fig. 2*